# EUROPEAN PATENT APPLICATION

(11) **EP 4 563 541 A1**
(43) Date of publication of application: **04.06.2025**
(21) Application number: 23846478.8
(22) Date of filing: 24.07.2023
(51) Int. Cl.: C03B 37/027, G02B 6/44

(54) **OPTICAL FIBER PRODUCTION DEVICE AND OPTICAL FIBER PRODUCTION METHOD**

(30) Priority: 25.07.2022 JP 2022117784
(71) Applicant: SUMITOMO ELECTRIC INDUSTRIES, LTD., Osaka-shi, Osaka 541-0041 (JP)
(72) Inventor: SUZUKI Tomoya, Osaka-shi, Osaka 541-0041 (JP); OKAZAKI Iwao, Osaka-shi, Osaka 541-0041 (JP); HASEGAWA Tatsuro, Osaka-shi, Osaka 541-0041 (JP)
(74) Representative: TBK
(86) International application number: PCT/JP2023/027065
(87) International publication number: WO 2024/024748

(57) **Abstract**

An optical fiber production device according to the present invention includes: a drawing furnace for melting a glass base material and forming a drawn glass fiber; a coating unit for coating a glass fiber with a resin layer to form on optical fiber; and a directly-beneath roller disposed directly beneath the drawing furnace to change the moving direction of the optical fiber; and a capstan for receiving the optical fiber. When the directly-beneath roller is viewed from a direction orthogonal to the rotation axis of the directly-beneath roller, the run surface of the directly-beneath roller on which the optical fiber runs is flat or convex. The width of the run surface is 2 mm to 10 mm.

## Description

### TECHNICAL FIELD

The present disclosure relates to an optical fiber production device and an optical fiber production method.

The present application is based on Japanese Patent Application No. 2022-117784 filed on July 25, 2022, the entire contents of which are incorporated herein by reference.

### BACKGROUND ART

Patent Literature 1 discloses an optical fiber production device.

### CITATION LIST

### PATENT LITERATURE

Patent Literature 1 : JPH05-27027U

### SUMMARY OF INVENTION

### SOLUTION TO PROBLEM

According to an aspect of the present disclosure, there is provided an optical fiber production device including:
a drawing furnace configured to melt a glass base material and configured to draw out a drawn glass fiber;
a coating unit configured to coat the glass fiber with a resin layer to form an optical fiber;
a bottom roller disposed directly below the drawing furnace, and the bottom roller being configured to change a running direction of the optical fiber; and
a capstan configured to pull the optical fiber.
in which when the bottom roller is viewed from a direction perpendicular to a rotation shaft of the bottom roller,
   a running surface of the bottom roller on which the optical fiber runs is flat or convex, and
   a width of the running surface is 2 mm or more and 10 mm or less.

According to another aspect of the present disclosure, there is provided an optical fiber production method of forming an optical fiber by coating, with a resin, a glass fiber drawn from a glass base material in a drawing furnace, and the optical fiber production method includes: guiding the optical fiber by bringing the optical fiber into contact, at only one point, with a bottom roller when viewed in a cross section of the optical fiber in contact with the bottom roller, the bottom roller being provided directly below the drawing furnace and configured to change a running direction of the optical fiber.

### BRIEF DESCRIPTION OF DRAWINGS

[FIG. 1] FIG. 1 is a schematic view showing an example of an optical fiber production device according to an embodiment of the present disclosure.
[FIG. 2] FIG. 2 is a view showing an example of a bottom roller in the production device shown in FIG. 1.
[FIG. 3] FIG. 3 is a cross-sectional view showing an example of the bottom roller.
[FIG. 4] FIG. 4 is a cross-sectional view showing a comparative example of the bottom roller.
[FIG. 5] FIG. 5 is a cross-sectional view showing an example of the bottom roller according to a first modification.
[FIG. 6] FIG. 6 is a cross-sectional view showing a state where an optical fiber runs while deviating from a center in the bottom roller shown in FIG. 5.
[FIG. 7] FIG. 7 is a cross-sectional view showing an example of the bottom roller according to a second modification.
[FIG. 8] FIG. 8 is a cross-sectional view showing a state where an optical fiber runs while deviating from a center in the bottom roller shown in FIG. 7.

### DESCRIPTION OF EMBODIMENTS

### Technical Problem

In the optical fiber production device disclosed in Patent Literature 1, there is provided a coating unit (die) that forms an optical fiber by coating a glass fiber, which is produced by melting a glass base material in a drawing furnace, with a resin layer. A guide roller having a V-shaped running surface for changing a running direction of the optical fiber is provided directly below the drawing furnace and the die.

When producing the optical fiber using the guide roller having the V-shaped running surface, the optical fiber may be unintentionally twisted as the optical fiber rolls on a V-shaped slope of the guide roller. When the optical fiber is twisted, an excessive load may be applied to the optical fiber.

### Advantageous Effects of Invention

According to the present disclosure, it is possible to provide a production device and a production method for producing an optical fiber with less unintentional twisting.

### Description of Embodiments of Present Disclosure

First, aspects of the present disclosure will be listed and described.
(1) According to an aspect of the present disclosure, there is provided an optical fiber production device including:
   a drawing furnace configured to melt a glass base material and configured to draw out a drawn glass fiber;
   a coating unit configured to coat the glass fiber with a resin layer to form an optical fiber;
   a bottom roller disposed directly below the drawing furnace, the bottom roller being configured to change a running direction of the optical fiber; and
   a capstan configured to pull the optical fiber.
   in which when the bottom roller is viewed from a direction perpendicular to a rotation shaft of the bottom roller,
      a running surface of the bottom roller on which the optical fiber runs is flat or convex, and
      a width of the running surface is 2 mm or more and 10 mm or less.
   According to the above production device, since the running surface of the bottom roller on which the optical fiber runs is flat or convex, when the bottom roller is viewed from the direction perpendicular to the rotation shaft of the bottom roller, the optical fiber is in contact with the running surface at one point. Since the width of the running surface is 2 mm or more and 10 mm or less, even when a flange is provided on the running surface of the bottom roller on a widthwise outer side, contact with the flange is less likely to occur. The optical fiber running on the running surface of the bottom roller constantly receives a force toward the rotation shaft of the bottom roller. At this time, when the optical fiber runs on the bottom roller having the flat or convex running surface, the optical fiber is less likely to roll on the running surface than when the optical fiber runs on a bottom roller having a V-shaped running surface, and thus twisting of the produced optical fiber can be prevented.
(2) In the production device according to (1), when the optical fiber runs on a central portion of the running surface, a direction of the rotation shaft of the bottom roller may be perpendicular to the running direction of the optical fiber on the running surface.
   When the direction of the rotation shaft of the bottom roller is perpendicular to the running direction of the optical fiber on the running surface, if the optical fiber runs on the central portion of the running surface, the optical fiber is less likely to roll in a width direction of the running surface.
(3) In the production device according to (1) or (2), the rotation shaft of the bottom roller may be supported by an elastic member.
   When the optical fiber runs on a portion other than the central portion of the running surface, the optical fiber runs in a direction slightly different from that when the optical fiber runs on the central portion of the running surface. According to the above production device, since the rotation shaft of the bottom roller is supported by the elastic member, the rotation shaft of the bottom roller is swingable to some extent. Accordingly, even when the optical fiber runs on the portion other than the central portion of the running surface, an orientation of the bottom roller can be adjusted such that the direction of the rotation shaft is perpendicular to the running direction of the optical fiber, and thus the optical fiber is less likely to roll in the width direction of the running surface.
(4) In the production device according to any one of (1) to (3),
   in which when the bottom roller is viewed from the direction perpendicular to the rotation shaft of the bottom roller, the running surface of the bottom roller may be convex, and
   a curvature radius of the running surface of the bottom roller may be equal to or greater than a running distance of the optical fiber from a point where the optical fiber separates from the running surface to a point where the optical fiber comes into contact with the capstan.
   According to the above production device, since the running surface has a convex shape, the running surface perpendicular to the running direction is present even when the running direction of the optical fiber deviates. Accordingly, the optical fiber is less likely to roll in the width direction of the running surface.
(5) In the production device according to any one of (1) to (4), the running surface may be made of a fluororesin.
   According to the above production device, a frictional force on the running surface can be reduced, and when the optical fiber rolls in the width direction of the running surface, twisting of the optical fiber due to the frictional force can be prevented.
(6) In the production device according to any one of (1) to (5),
   the bottom roller may include a plurality of rollers, and
   the plurality of rollers may be disposed such that rotation shafts of the plurality of rollers are arranged in an arc shape when viewed from a direction of the rotation shafts of the rollers.
   According to the above production device, since the bottom roller includes the plurality of rollers, the running direction of the optical fiber is changed by the plurality of rollers as compared with when the bottom roller includes one roller. At this time, since the plurality of rollers are disposed such that the rotation shafts of the plurality of rollers are arranged in the arc shape, the running direction of the optical fiber is sequentially changed by each roller. That is, an angle of the running direction changed by one roller is reduced, a length of contact between one roller and the optical fiber is also reduced, and a frictional force between one roller and the optical fiber is reduced, thereby preventing twisting of the optical fiber due to the frictional force. As the time and distance during which the optical fiber is in contact with one roller increase, the optical fiber is more likely to roll in the width direction of the running surface. However, by configuring the bottom roller with the plurality of rollers and setting the time and distance during which the optical fiber is in contact with one roller to be small, an amount of twisting in one roller is reduced, thereby reducing the amount of twisting transmitted to an upstream side and a distance over which the twisting is transmitted to the upstream side.
(7) In the production device according to any one of (1) to (6),
   in which a second guide roller with which the optical fiber comes into contact after coming into contact with the bottom roller may be further provided downstream of the bottom roller, and
   the second guide roller may be disposed such that a rotation shaft of the second guide roller is perpendicular to the rotation shaft of the bottom roller.
   According to the above production device, since the second guide roller is disposed such that the rotation shaft of the bottom roller and the rotation shaft of the second guide roller are perpendicular to each other, the bottom roller and the second guide roller support the optical fiber in different directions. Accordingly, the optical fiber is less likely to roll in the width direction of the running surface when the optical fiber runs on the running surface of the bottom roller.
(8) According to another aspect of the present disclosure, there is provided an optical fiber production method of forming an optical fiber by coating, with a resin, a glass fiber drawn from a glass base material in a drawing furnace, and the optical fiber production method includes: guiding the optical fiber by bringing the optical fiber into contact, at only one point, with a bottom roller when viewed in a cross section of the optical fiber in contact with the bottom roller, the bottom roller being provided directly below the drawing furnace and configured to change a running direction of the optical fiber.

According to the above production method, the running direction of the optical fiber is changed by using the bottom roller that is in contact with the optical fiber at only one point when viewed in the cross section of the optical fiber in contact with the bottom roller. At this time, since the roller and the optical fiber are in contact with each other at only one point, the optical fiber is less likely to roll on the running surface than when a bottom roller having a V-shaped running surface guides an optical fiber by bring the optical fiber into contact with the running surface at two points.

### Details of Embodiments of Present Disclosure

Specific examples of an optical fiber production device and an optical fiber production method according to embodiments of the present disclosure will be described below with reference to the drawings. The present invention is not limited to these exemplifications, but is indicated by the scope of claims, and is intended to include all modifications within a scope and meaning equivalent to the scope of claims.

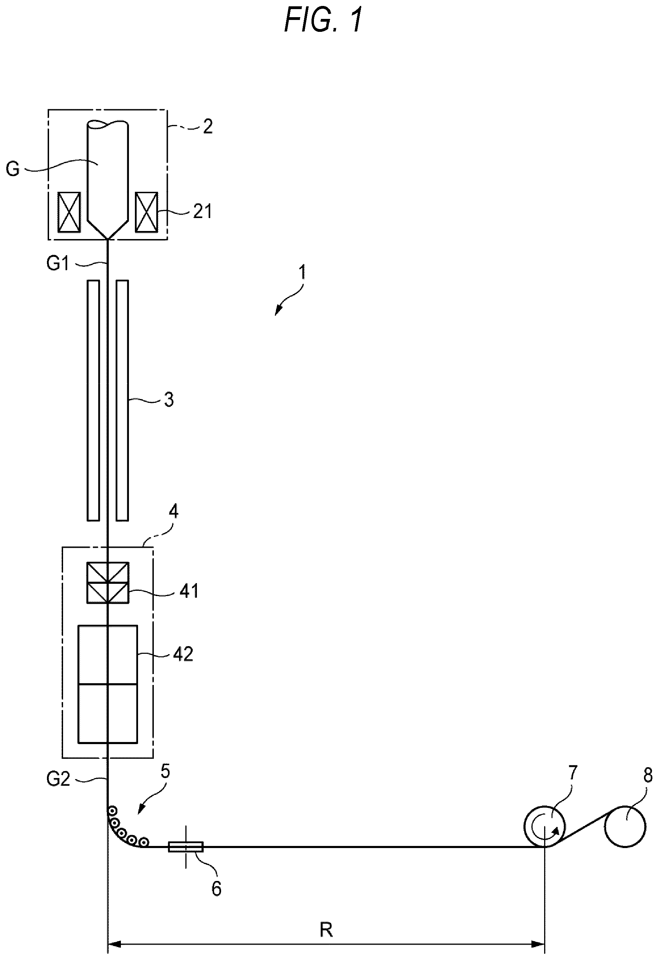

FIG. 1 is a schematic view showing an example of a production device 1 according to an embodiment of the present disclosure. As shown in FIG. 1, the production device 1 includes, on the most upstream side, a drawing furnace 2 configured to melt a glass base material G for an optical fiber and draws out a drawn glass fiber G1. The drawing furnace 2 is provided therein with a heating element 21 to surround the glass base material G, and the heating element 21 forms heating region where the glass base material G can be softened. Although not shown, a gas supply device configured to supply a purge gas to the heating region is connected to the drawing furnace 2.

The glass base material G is fed into the drawing furnace 2 such that a lower end portion of the glass base material G is located in the heating region formed by the heating element 21. The glass base material G is stretched downward to be reduced in diameter, thereby forming a glass fiber G1, which is an optical fiber before being coated with a resin.

A cooling device 3 configured to cool the glass fiber G1 is provided below (downstream of) the drawing furnace 2. For example, a cooling gas such as helium gas is used as a cooling means in the cooling device 3. The glass fiber G1 is formed such that an outer diameter thereof has a predetermined dimension.

A coating unit 4 configured to coat the glass fiber G1 with a resin layer to form an optical fiber G2 is provided downstream of the cooling device 3. The coating unit 4 includes an applying unit 41 configured to apply a resin to the glass fiber G1 and a curing unit 42 configured to cure the applied resin. The applying unit 41 is configured to apply, for example, an ultraviolet-curable resin to the glass fiber G1. When the applied resin is the ultraviolet-curable resin, the curing unit 42 irradiates the resin applied by the applying unit 41 with ultraviolet rays to cure the resin. The glass fiber G1 passed through the applying unit 41 and the curing unit 42 is coated with the resin layer on an outer periphery thereof to form the optical fiber G2.

After passing through the curing unit 42, the optical fiber G2 is hung on a bottom roller 5 disposed directly below the drawing furnace 2, and a running direction is changed by the bottom roller 5. For example, as shown in FIG. 1, the bottom roller 5 changes the running direction of the optical fiber G2, which runs in an upper and lower direction upstream of the bottom roller 5, to a left and right direction downstream of the bottom roller 5.

The optical fiber G2 whose running direction is changed by the bottom roller 5 is hung on a second guide roller 6 provided downstream of the bottom roller 5. In the example shown in FIG. 1, running of the optical fiber G2 is guided by the bottom roller 5 and the second guide roller 6.

Details of the bottom roller 5 and the second guide roller will be described later.

The optical fiber G2 passed through the second guide roller 6 is pulled by a capstan 7 provided downstream of the second guide roller 6 and then wound up by a winding-up bobbin 8.

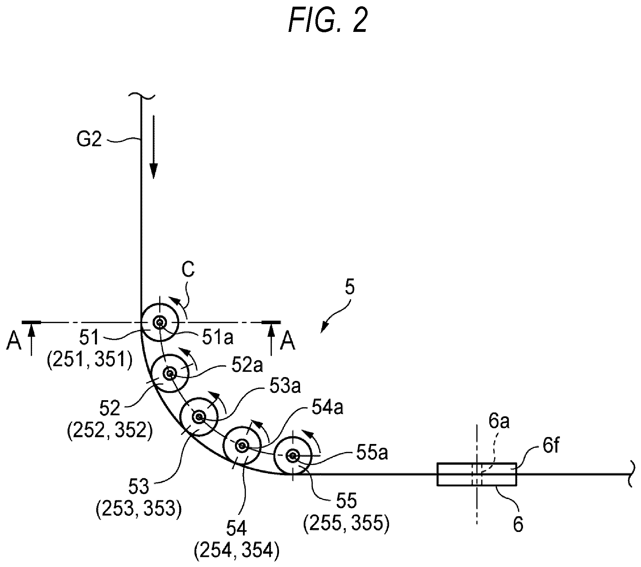

Next, the bottom roller 5 and the second guide roller 6 will be described with reference to FIG. 2. FIG. 2 is a partially enlarged view showing the bottom roller 5 and the second guide roller 6 in the production device 1 shown in FIG. 1.

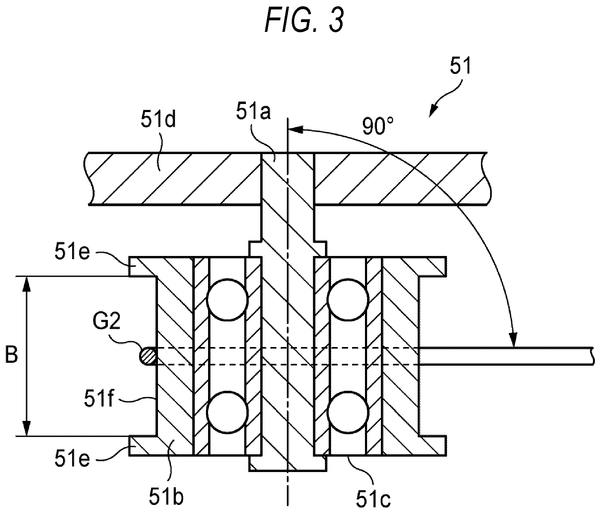

As shown in FIG. 2, the bottom roller 5, which is a first guide roller configured to first come into contact with the optical fiber G2, includes a plurality of (five in this example) rollers 51, 52, 53, 54, and 55. The five rollers 51, 52, 53, 54, and 55 are disposed sequentially and continuously from a position below the upstream curing unit 42 to a position to the left of the downstream second guide roller 6. The rollers 51, 52, 53, 54, and 55 may be disposed such that rotation shafts 51a, 52a, 53a, 54a, and 55a (also see FIG. 3) of the rollers 51, 52, 53, 54, and 55 are arranged in an arc shape when viewed in a rotation shaft direction of the rollers.

The second guide roller 6 is a roller with which the optical fiber G2 comes into contact after coming into contact with the rollers 51, 52, 53, 54, and 55. The second guide roller 6 is disposed such that a rotation shaft 6a of the second guide roller 6 is perpendicular to the rotation shafts 51a, 52a, 53a, 54a, 55a of the rollers 51, 52, 53, 54, 55. In the example shown in the drawing, the second guide roller 6 is disposed such that the optical fiber G2 runs on a running surface 6f on a near side (front side in FIG. 2) of the second guide roller 6. The second guide roller 6 may be disposed such that the optical fiber G2 runs on the running surface 6f on a far side (back side in FIG. 2) of the second guide roller 6. Accordingly, the second guide roller 6 can change the running direction of the optical fiber G2 to a direction different from that of the bottom roller 5.

Next, an embodiment of the bottom roller 5 will be described with reference to FIG. 3. FIG. 3 is a cross-sectional view taken along the rotation shaft of the bottom roller 5 according to the embodiment. Since the five rollers 51, 52, 53, 54, and 55 constituting the bottom roller 5 have the same configuration, only the roller 51 will be described below. FIG. 3 is the cross-sectional view of the roller 51 taken along a line A-A of the roller 51 in FIG. 2.

As shown in FIG. 3, the roller 51 includes the rotation shaft 51a provided at a center portion, an annular member 51b provided to surround the rotation shaft 51a and configured to be rotated about the rotation shaft 51a, a running surface 51f that is an outer peripheral surface of the annular member 51b and on which the optical fiber G2 runs, a bearing portion 51c provided around the rotation shaft 51a, and a support portion 51d that supports the rotation shaft 51a. The roller 51 according to the present embodiment is formed such that the running surface 51f on which the optical fiber G2 runs is flat when viewed from a direction perpendicular to the rotation shaft 51a of the roller 51. The running surface 51f is formed along a direction of the rotation shaft 51a when viewed from the direction perpendicular to the rotation shaft 51a of the roller 51. Flanges 51e that define a width of the running surface 51f are formed at both side portions of the running surface 51f. The running surface 51f is a flat running groove defined by the flanges 51e at both end portions. A width B of the running surface 51f is 2 mm or more and 10 mm or less. In the example shown in FIG. 3, the roller 51 of a cantilever type is shown, but the roller is not limited thereto, and may be, for example, a bottom roller of a double-supported type.

The running surface 51f is made of, for example, a fluororesin capable of reducing a frictional force. The fluororesin may be, for example, PTFE (polytetrafluoroethylene resin), PFA (perfluoroalkoxy fluororesin), FEP (tetrafluoro-hexafluoropropylene copolymer), or ETFE (ethylene-tetrafluoroethylene copolymer).

The expression "the running surface is made of a fluororesin" may include, for example, that the running surface is coated with a fluororesin and that the annular member 51b itself is made of a fluororesin.

As shown in FIG. 3, when the optical fiber G2 runs on a central portion of the running surface 51f in a width B direction, the direction of the rotation shaft 51a of the roller 51 is perpendicular (90 degrees) to the running direction of the optical fiber G2 on the running surface 51f.

A method for producing the optical fiber G2 will be described.

First, the glass base material G is put into the drawing furnace 2, the glass base material G is heated by the heating element 21 and stretched downward, thereby drawing the glass fiber G1 having a reduced diameter.

Next, after the drawn glass fiber G1 is cooled by the cooling device 3, a resin is applied to an outer periphery of the glass fiber G1 by the applying unit 41 of the coating unit 4, and the applied resin is further cured by the curing unit 42 to obtain the optical fiber G2 coated with the resin.

Next, a running direction of the optical fiber G2 coated with the resin is changed by the bottom rollers 5 (rollers 51, 52, 53, 54, and 55) provided directly below the drawing furnace 2. At this time, the rollers 51, 52, 53, 54, and 55 guide the optical fiber G2 that runs on the running surface 51f in a state where the optical fiber G2 is in contact with the running surface 51f at only one point when viewed in a cross section of the optical fiber G2 in contact with the rollers 51, 52, 53, 54, and 55. At this time, each of the rollers 51, 52, 53, 54, and 55 rotates in an arrow C direction (counterclockwise) shown in the drawing along as the optical fiber G2 runs. Since the glass fiber G1 and the optical fiber G2 drawn from the glass base material G are pulled by the capstan 7, tension toward the rotation shafts 51a, 52a, 53a, 54a, and 55a acts on the optical fiber G2 that runs on the running surfaces 51f of the rollers 51, 52, 53, 54, and 55 (also see FIG. 3).

Next, the optical fiber G2 whose running direction is changed is guided to the capstan 7 by the second guide roller 6 provided downstream of the bottom roller 5. At this time, the second guide roller 6 supports and guides the running optical fiber G2 from a direction different from a direction supported by the bottom roller 5 (rollers 51, 52, 53, 54, 55).

Next, the guided optical fiber G2 is pulled by the capstan 7 and wound up by the winding-up bobbin 8.

As disclosed in Patent Literature 1, the bottom roller having the V-shaped running surface is intended to prevent twisting of the optical fiber by holding the running optical fiber through sandwiching the optical fiber at two points in a V-shaped groove. However, in recent years, a speed (linear speed) at which an optical fiber is pulled tends to increase, and measures against twisting of the optical fiber are insufficient in a bottom roller having a V-shaped running surface. For example, when a linear velocity of the optical fiber increases, the optical fiber may vibrate while being pulled.

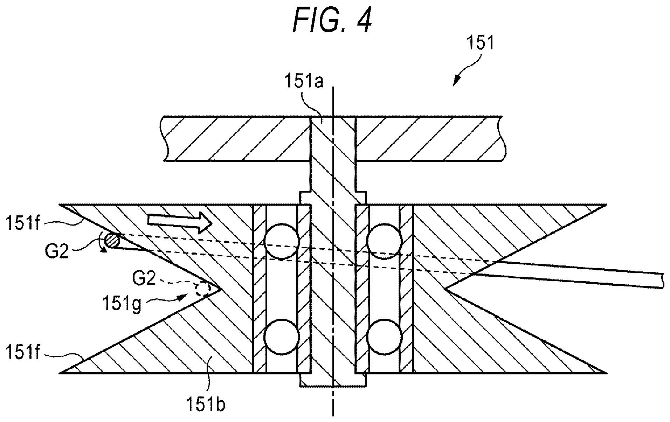

For example, as in a V-shaped roller 151 shown in FIG. 4, in a case where a running surface 151f, which is an outer peripheral surface of an annular member 151b and on which the optical fiber G2 runs, is V-shaped, when the optical fiber G2 vibrates, the optical fiber G2 may come into contact with only one surface of the V-shaped running surface 151f. At this time, since a force toward a rotation shaft 151a of the V-shaped roller 151 is constantly applied to the optical fiber G2 running on the running surface 151f by a capstan, the optical fiber G2 in contact with the one surface tends to roll into the V-shaped groove 151g. The inventors have found that in such a case, the optical fiber G2 is more likely to be twisted.

The force acting on the optical fiber G2 running on the running surface 151f toward the rotation shaft 151a of the V-shaped roller 151 increases as a tension increases. Therefore, it has been found that movement of the optical fiber G2 rolling into the V-shaped groove 151g is more remarkable, and the optical fiber G2 is more likely to be twisted. When twisting occurs in portions of the optical fiber G2 running on the running surface 151f, the twisting propagates not only to a portion of the optical fiber G2 on the running surface 151f but also to a portion of the optical fiber G2 upstream of the running surface 151f. Therefore, the optical fiber G2 may be produced while being fixed in an unintentionally twisted state.

In contrast, in the production device 1 according to the present embodiment, when viewed from a direction perpendicular to the rotation shafts 51a, 52a, 53a, 54a, and 55a, each running surface 51f on which the optical fiber G2 runs is flat, and the width B thereof is 2 mm or more and 10 mm or less. According to the above configuration, since each running surface 51f is flat, the optical fiber G2 is in contact with the running surface 51f at one point. Since the width B of the running surface 51f is ensured to be 2 mm or more, even when the flange 51e is provided on an outer side of the running surface 51f in the width B, the running optical fiber G2 is less likely to come into contact with the flange 51e. In addition, since the width B is 10 mm or less, the bottom roller 5 (the rollers 51, 52, 53, 54, and 55) can be prevented from becoming excessively heavy, and a running resistance in the bottom roller 5 can be reduced. A force toward the rotation shafts 51a, 52a, 53a, 54a, and 55a is constantly applied to the optical fiber G2 that runs on the running surface 51f, but the optical fiber G2 can be less likely to roll on the running surface 51f than in a case of the V-shaped running surface 151f of the V-shaped roller 151 by forming the running surface 51f flat. Accordingly, the optical fiber G2 with less twisting can be produced.

In the production device 1 according to the present embodiment, when the optical fiber G2 runs on a central portion of the running surface 51f of the rollers 51, 52, 53, 54, and 55, a direction of the rotation shafts 51a, 52a, 53a, 54a, and 55a of the rollers 51, 52, 53, 54, and 55 is perpendicular to a running direction of the optical fiber G2 on the running surface 51f. At this time, if the optical fiber G2 runs on the central portion of the running surface 51f, the optical fiber G2 is less likely to roll in a width direction of the running surface. Therefore, with the above configuration, occurrence of twisting of the optical fiber G2 can be prevented.

In the production device 1 according to the present embodiment, the running surfaces 51f of the rollers 51, 52, 53, 54, and 55 are made of a fluororesin. Since a frictional force on the running surface 51f can be reduced, the optical fiber G2 is more likely to slide when receiving a force in the width direction of the running surface 51f. Accordingly, the optical fiber G2 can be prevented from rolling and twisting due to the frictional force between the optical fiber G2 and the running surface 51f.

In the production device 1 according to the present embodiment, the bottom roller 5 includes the plurality of rollers 51, 52, 53, 54, and 55, and is disposed such that the rotation shafts 51a, 52a, 53a, 54a, and 55a of the plurality of rollers 51, 52, 53, 54, and 55 are arranged in an arc shape when viewed from the direction of the rotation shafts 51a, 52a, 53a, 54a, and 55a of the rollers 51, 52, 53, 54, and 55.

Since the running direction of the optical fiber G2 is sequentially changed by the plurality of rollers 51, 52, 53, 54, and 55, a change angle at which the running direction is changed by one bottom roller can be reduced, and thus a length of contact between the one bottom roller and the optical fiber G2 can be shortened. At this time, since the frictional force generated between the one bottom roller and the optical fiber G2 can be reduced, twisting of the optical fiber G2 due to the frictional force can be prevented.

Further, by reducing the change angle at which the running direction is changed by the one bottom roller, the time and distance during which the optical fiber G2 is in contact with each of the rollers 51, 52, 53, 54, and 55 can be reduced, and thus when the optical fiber G2 rolls on a plurality of running surfaces of the rollers 51, 52, 53, 54, and 55 including the running surface 51f, an amount of twisting in each of the rollers 51, 52, 53, 54, and 55 is reduced. Accordingly, the amount of twisting transmitted to an upstream side and a distance over which the twisting is transmitted to the upstream side can be reduced.

According to an optical fiber production method of the present embodiment, the optical fiber G2 comes into contact with each of the rollers 51, 52, 53, 54, and 55 constituting the bottom roller 5 at only one point. Accordingly, the optical fiber G2 is less likely to roll on the running surface than when a bottom roller having a V-shaped running surface guides an optical fiber by bring the optical fiber into contact with the running surface at two points.

The bottom roller 5 may include only one roller, but preferably includes the plurality of rollers 51, 52, 53, 54, 55 as in the present embodiment. By using a plurality of bottom rollers, a diameter of each bottom roller can be made smaller than when using a single bottom roller.

At this time, a total length of contact portions (contact length) between the running surfaces 51f and the optical fiber G2 is smaller than when the optical fiber G2 runs on a running surface of the single bottom roller. By reducing a contact length of the entire bottom roller 5 with the optical fiber G2, the frictional force on the running surface 51f affecting the optical fiber is reduced, and thus twisting of the optical fiber due to the frictional force is more likely to be prevented.

A total contact angle of the rollers is preferably 90 degrees or less. The "contact angle of the roller" refers to a central angle of the roller corresponding to a length of an arc where the roller is in contact with the optical fiber. By setting the total contact angle with the optical fiber to 90 degrees or less, the contact length with the optical fiber can be reduced, and thus the frictional force generated between the running surface 51f and the optical fiber G2 can be reduced and twisting of the optical fiber G2 can be prevented.

In the production device 1 according to the present embodiment, the second guide roller 6 along which the optical fiber G2 runs next to the bottom roller 5 is provided downstream of the bottom roller 5, and the rotation shaft 6a of the second guide roller 6 is perpendicular to the rotation shafts 51a, 52a, 53a, 54a, and 55a of the bottom roller 5 (rollers 51, 52, 53, 54, and 55). At this time, a direction in which the bottom roller 5 (rollers 51, 52, 53, 54, 55) supports the optical fiber G2 is different from a direction in which the second guide roller 6 supports the optical fiber G2. Therefore, when the optical fiber G2 runs on the running surface 51f of the bottom roller 5 (the rollers 51, 52, 53, 54, and 55), the optical fiber G2 is less likely to roll in the width direction of the running surface 51f, and thus occurrence of twisting of the optical fiber G2 can be prevented.

The second guide roller 6 is preferably provided such that the optical fiber G2 that runs from the bottom roller 5 to the second guide roller 6 is perpendicular to the rotation shaft 6a of the second guide roller 6. In this case, a contact length between the second guide roller 6 and the optical fiber G2 can be reduced, and thus twisting of the optical fiber G2 is prevented.

### (First Modification of Bottom roller)

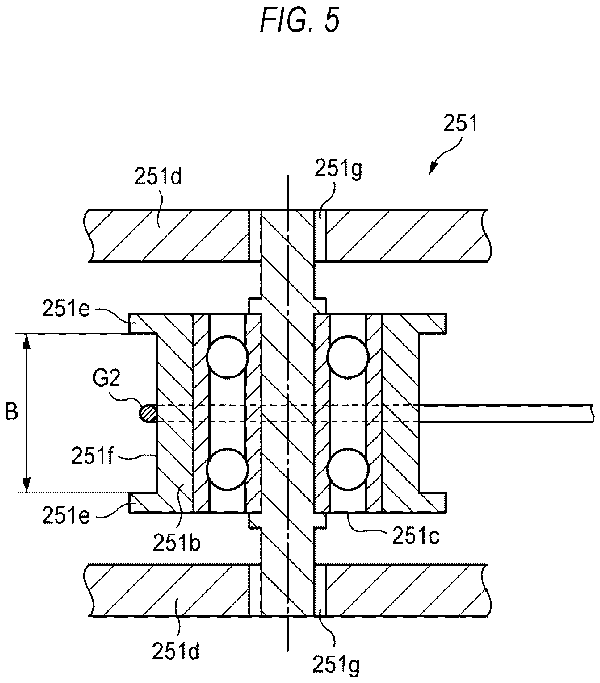

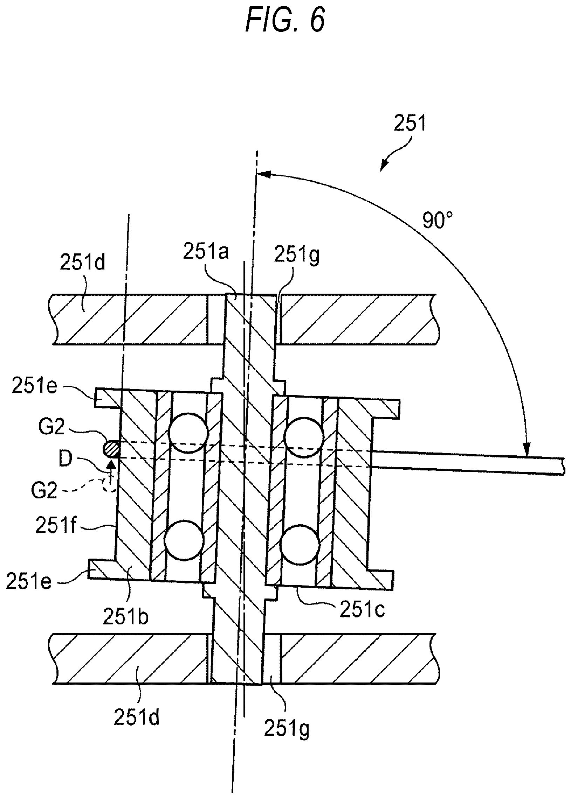

Next, a first modification of the bottom roller 5 will be described with reference to FIGs. 5 and 6. FIG. 5 is a cross-sectional view taken along a rotation shaft of the bottom roller 5 according to the first modification. Since five rollers 251, 252, 253, 254, and 255 (also see FIG. 3) constituting the bottom roller 5 according to the first modification have the same configuration, only the roller 251 will be described below. FIG. 5 is the cross-sectional view of the roller 251 taken along the line A-A of the roller 251 in FIG. 2.

As shown in FIG. 5, the roller 251 includes a rotation shaft 251a provided at a center portion, an annular member 251b provided to surround the rotation shaft 251a and rotatable about the rotation shaft 251a, a running surface 251f that is an outer peripheral surface of the annular member 251b and on which the optical fiber G2 runs, a bearing portion 251c provided around the rotation shaft 251a, and support portions 251d that support the rotation shaft 251a. The rotation shaft 251a of the roller 251 is supported by the support portions 251d via elastic members (for example, rubber) 251g. The elastic member 251g is provided between an outer periphery of each of both end portions of the rotation shaft 251a and an inner periphery of a support hole formed in the support portion 251d. The roller 251 is a roller of a double-supported type.

The roller 251 is similar to the roller 51 in FIG. 3 in that the running surface 251f on which the optical fiber G2 runs is flat when viewed from a direction perpendicular to the rotation shaft 251a of the roller 251, and in that flanges 251e are formed at both side portions of the running surface 251f and the width B of the running surface 251f is 2 mm or more and 10 mm or less.

For example, as shown in FIG. 6, when the optical fiber G2 runs at a position deviated in a direction of an arrow D from a central portion of the running surface 251f, the optical fiber G2 runs in a direction slightly different from that when the optical fiber G2 runs on the central portion of the running surface 251f. In contrast, since the rotation shaft 251a of the roller 251 according to the first modification is supported by the support portions 251d via the elastic members 251g, and is thus swingable with respect to the support portions 251d to some extent. Therefore, in the roller 251, even when the optical fiber G2 runs on a portion other than the central portion of the running surface 251f, an orientation of the roller 251 can be adjusted such that a direction of the rotation shaft 251a is perpendicular to a running direction of the optical fiber G2. Accordingly, the optical fiber G2 is less likely to roll in a width direction of the running surface 251f, and thus occurrence of twisting of the optical fiber G2 can be prevented.

### (Second Modification of Bottom roller)

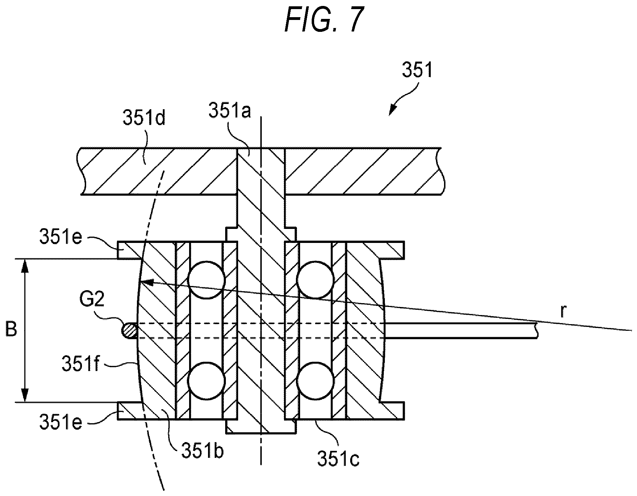

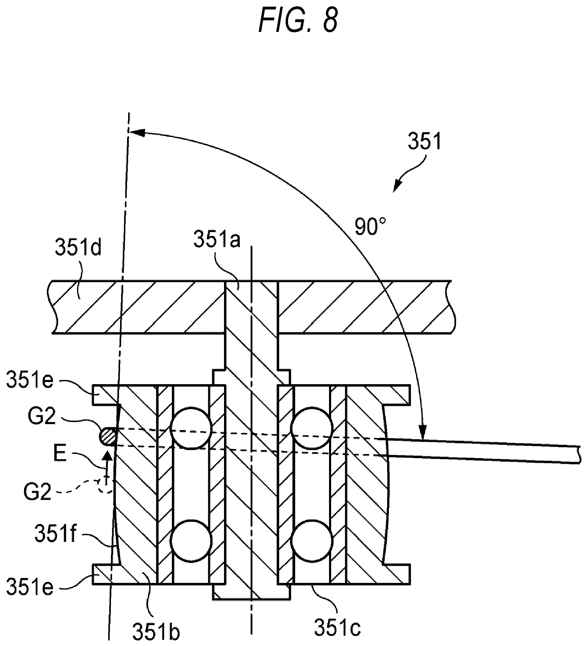

Next, a second modification of the bottom roller 5 will be described with reference to FIGs. 7 and 8. FIG. 7 is a cross-sectional view taken along a rotation shaft of the bottom roller 5 according to the second modification. Since five rollers 351, 352, 353, 354, and 355 (also see FIG. 3) constituting the bottom roller 5 according to the second modification have the same configuration, only the roller 351 will be described below. FIG. 7 is the cross-sectional view of the roller 351 taken along the line A-A of the roller 351 in FIG. 2.

As shown in FIG. 7, the roller 351 includes a rotation shaft 351a provided at a center portion, an annular member 351b provided to surround the rotation shaft 351a and rotatable about the rotation shaft 351a, a running surface 351f that is an outer peripheral surface of the annular member 351b and on which the optical fiber G2 runs, a bearing portion 351c provided around the rotation shaft 351a, and a support portion 351d that supports the rotation shaft 351a. The running surface 351f of the roller 351 is formed in a convex shape whose a central portion in a width direction slightly protrudes more than other portions when viewed from a direction perpendicular to the rotation shaft 351a of the roller 351. For example, the running surface 351f of the roller 351 is formed in a convex arc shape. The running surface 351f of the roller 351 is formed such that a curvature radius r thereof is equal to or greater than a running distance R of the optical fiber G2 (see FIG. 1) from a point where the optical fiber G2 separates from the running surface 351f to a point where the optical fiber G2 comes into contact with the capstan 7.

The rollers 352, 353, 354, and 355 may have the same curvature radius r as the roller 351, or may have different curvature radii. When using rollers having different curvature radii, for example, the curvature radius of each of the rollers 352, 353, 354, and 355 may be formed to be equal to or greater than the running distance of the optical fiber G2 from the point where the optical fiber G2 separates from the running surface 351f to the point where the optical fiber G2 comes into contact with the capstan 7.

The roller 351 is similar to the roller 51 in FIG. 3 in that flanges 351e are formed at both side portions of the running surface 351f of the roller 351, and the width B of the running surface 351f is 2 mm or more and 10 mm or less.

For example, as shown in FIG. 8, even when a position where the optical fiber G2 runs is deviated in a direction of an arrow E from a central portion of the running surface 351f and a running direction of the optical fiber G2 is inclined, since the running surface 351f has the convex arc shape, the running surface 351f perpendicular to the running direction of the optical fiber G2 is present at the deviated position. Accordingly, the optical fiber G2 is less likely to roll in the width direction of the running surface 351f. In order to prevent the optical fiber G2 from rolling on the running surface 351f, the curvature radius r of the running surface 351f is preferably equal to or greater than the running distance R of the optical fiber G2 from the point where the optical fiber G2 separates from the running surface 351f to the point where the optical fiber G2 comes into contact with the capstan 7.

Although the present disclosure has been described in detail with reference to the specific aspects, it is apparent to those skilled in the art that various changes and modifications can be made without departing from the spirit and scope of the present invention. In addition, the number, positions, shapes, and the like of members described above are not limited to those in the above-described embodiments, and can be changed to the number, positions, shapes, and the like suitable for carrying out the present invention.

For example, an example in which the bottom roller includes five rollers has been described in the present embodiment, but the number of rollers constituting the bottom roller is not limited to that illustrated in the present embodiment. For example, the bottom roller may include less than five rollers, or more than five rollers.

The running surface of the second guide roller may be flat, convex, or concave (including V-shaped).

### REFERENCE SIGNS LIST

1: optical fiber production device
2: drawing furnace
3: cooling device
4: coating unit
5: bottom roller
6: second guide roller
7: capstan
8: winding-up bobbin
21: heating element
41: applying unit
42: curing unit
51, 52, 53, 54, 55, 251, 252, 253, 254, 255, 351, 352, 353, 354, 355: roller
6a, 51a, 52a, 53a, 54a, 55a, 151a, 251a, 351a rotation shaft
51b, 151b, 251b, 351b: annular member
51c, 251c, 351c: bearing portion
51d, 251d, 351d: support portion
51e, 251e, 351e: flange
6f, 51f, 151f, 251f, 351f: running surface
151: v-shaped roller
151g: v-shaped groove
251g: elastic member
G: glass base material
G1: glass fiber
G2: optical fiber

## Claims

1. An optical fiber production device comprising:
a drawing furnace configured to melt a glass base material and configured to draw out a drawn glass fiber;
a coating unit configured to coat the glass fiber with a resin layer to form an optical fiber;
a bottom roller disposed directly below the drawing furnace, the bottom roller being configured to change a running direction of the optical fiber; and
a capstan configured to pull the optical fiber,
wherein when the bottom roller is viewed from a direction perpendicular to a rotation shaft of the bottom roller:
a running surface of the bottom roller on which the optical fiber runs is flat or convex; and
a width of the running surface is 2 mm or more and 10 mm or less.

2. The optical fiber production device according to claim 1,
wherein when the optical fiber runs on a central portion of the running surface, a direction of the rotation shaft of the bottom roller is perpendicular to the running direction of the optical fiber on the running surface.

3. The optical fiber production device according to claim 1 or 2,
wherein the rotation shaft of the bottom roller is supported by an elastic member.

4. The optical fiber production device according to claim 1 or 2,
wherein when the bottom roller is viewed from the direction perpendicular to the rotation shaft of the bottom roller, the running surface of the bottom roller is convex, and
a curvature radius of the running surface of the bottom roller is equal to or greater than a running distance of the optical fiber from a point where the optical fiber separates from the running surface to a point where the optical fiber comes into contact with the capstan.

5. The optical fiber production device according to claim 1 or 2,
wherein the running surface is made of a fluororesin.

6. The optical fiber production device according to claim 1 or 2,
wherein the bottom roller includes a plurality of rollers, and
the plurality of rollers are disposed such that rotation shafts of the plurality of rollers are arranged in an arc shape when viewed from a direction of the rotation shafts of the rollers.

7. The optical fiber production device according to claim 1 or 2,
wherein a second guide roller with which the optical fiber comes into contact after coming into contact with the bottom roller is further provided downstream of the bottom roller, and
the second guide roller is disposed such that a rotation shaft of the second guide roller is perpendicular to the rotation shaft of the bottom roller.

8. An optical fiber production method of forming an optical fiber by coating, with a resin, a glass fiber drawn from a glass base material in a drawing furnace, the optical fiber production method comprising:
guiding the optical fiber by bringing the optical fiber into contact, at only one point, with a bottom roller when viewed in a cross section of the optical fiber in contact with the bottom roller, the bottom roller being provided directly below the drawing furnace and configured to change a running direction of the optical fiber.
